# EUROPEAN PATENT APPLICATION

(11) **EP 4 744 976 A1**
(43) Date of publication of application: **20.05.2026**
(21) Application number: 24842065.5
(22) Date of filing: 25.05.2024
(51) Int. Cl.: B60R 25/25

(54) **UNLOCKING/LOCKING CONTROL METHOD AND APPARATUS, AND VEHICLE**

(30) Priority: 20.07.2023 CN 202310890725
(71) Applicant: Ofilm Microelectronics (Nanchang) Co., Ltd., Nanchang, Jiangxi 330224 (CN); Bayerische Motoren Werke Aktiengesellschaft, 80809 München (DE)
(72) Inventor: LIU, Wuxing, Nanchang, Jiangxi 330224 (CN); LI, Yuan, Nanchang, Jiangxi 330224 (CN); XIAO, Detang, Nanchang, Jiangxi 330224 (CN); JIN, Meng, Nanchang, Jiangxi 330224 (CN); YANG, Xiaofei, Nanchang, Jiangxi 330224 (CN)
(74) Representative: Taor, Simon Edward William
(86) International application number: PCT/CN2024/095370
(87) International publication number: WO 2025/016065

(57) **Abstract**

An unlocking/locking control method, an unlocking/locking control apparatus (10), and a vehicle (100). The unlocking/locking control method includes the following. In a locked state, a target (P) is detected by a radar (11) within a first preset range (C1), and a moving speed (V) of the target (P) is obtained by the radar (11). In response to the target (P) being detected and the moving speed (V) of the target (P) being less than a preset speed threshold V0, a low-power camera (12) is started, and posture recognition is performed on the target (P) within a second preset range (C2) by the low-power camera (12). The second preset range (C2) is smaller than the first preset range (C1). In response to determining that a posture of the target (P) satisfies a preset posture condition, a depth camera (13) is started, and facial recognition is performed on the target (P) within a third preset range (C3) by the depth camera (13). The third preset range (C3) is smaller than the second preset range (C2). In response to the facial recognition being successful, an unlocking instruction is issued to unlock.

## Description

### CROSS-REFERENCE TO RELATED APPLICATION(S)

This application claims priority to Chinese Patent Application No. 202310890725.1, filed July 20, 2023 to China national intellectual property administration (CNIPA), and entitled "UNLOCKING/LOCKING CONTROL METHOD AND APPARATUS, AND VEHICLE", the entire disclosure of which is hereby incorporated by reference.

### TECHNICAL FIELD

This disclosure relates to the field of security and protection, and in particular, to an unlocking/locking control method, an unlocking/locking control apparatus, and a vehicle.

### BACKGROUND

Vehicles are gradually entering the era of intelligence. To enhance user experience, various manufacturers have introduced a passive unlocking/locking function, allowing users to unlock and lock without any operation. However, existing unlocking/locking control methods usually require relevant devices to standby for a long time, and the devices used have relatively high power consumption for safety reasons, resulting in increased energy consumption of the passive unlocking/locking function.

### SUMMARY

The present disclosure proposes an unlocking/locking control method, an unlocking/locking control apparatus, and a vehicle, which feature low power consumption and relatively high unlocking accuracy. The specific technical solutions are as follows.

In a first aspect, the present disclosure provides an unlocking/locking control method, and the method includes the following. In a locked state, a target is detected by a radar within a first preset range, and a moving speed of the target is obtained by the radar. In response to the target being detected and the moving speed of the target being less than a preset speed threshold V0, a low-power camera is started, and posture recognition is performed on the target within a second preset range by the low-power camera. The second preset range is smaller than the first preset range. In response to determining that a posture of the target satisfies a preset posture condition, a depth camera is started, and facial recognition is performed on the target within a third preset range by the depth camera. The third preset range is smaller than the second preset range. In response to the facial recognition being successful, an unlocking instruction is issued to unlock.

According to the unlocking/locking control method of the present disclosure, the radar first detects the target within the first preset range and obtains the moving speed of the target. In this way, objects moving excessively fast or people using transportation means can be filtered out, thereby avoiding frequent startup of the low-power camera. Then, the low-power camera performs the posture recognition on the target to determine whether the target intends to approach the vehicle, thereby avoiding frequent startup of the depth camera due to detection of pedestrians. Finally, the depth camera performs the facial recognition on the target to unlock.

Since the power consumption of the radar, the low-power camera, and the depth camera increases step by step, while the respective recognition range decreases step by step, the method of the present disclosure, through the cooperation of the radar, the low-power camera, and the depth camera, sets screening conditions in combination with the user usage scenarios, thereby ultimately achieving low power consumption and relatively high recognition accuracy.

In an embodiment, a duration from a moment at which the radar detects the target to a moment at which the low-power camera is started is T1, the first preset range is less than or equal to W1, the second preset range is less than or equal to W2, and W2 satisfies: W2 ≥ W1 - V0 × T1.

In this embodiment, the process from detection of the target by the radar to the completion of startup of the low-power camera includes as follows. The radar detects the target, obtains the moving speed of the target, determines whether the moving speed of the target satisfies the preset speed threshold V0, and sends a signal to start the low-power camera, and the startup of the low-power camera is completed. When setting W2, by referring to the time consumption of this process in combination with the moving speed of the target, it can be ensured that the detection range of the low-power camera satisfies the recognition requirements and avoids the increase of power consumption caused by the premature startup of the low-power camera.

In an embodiment, a duration from the moment at which the low-power camera is started to a moment at which the depth camera is started is T2, the third preset range is less than or equal to W3, and W3 satisfies: W3 ≥ W2 - V0 × T2.

In this embodiment, the process from the beginning of recognition by the low-power camera to the completion of the startup of the depth camera includes as follows. The low-power camera recognizes the posture of the target, determines whether the posture of the target satisfies the preset posture condition, and sends a signal to start the depth camera, and the startup of the depth camera is completed. When setting W3, by referring to the time consumption of this process in combination with the moving speed of the target, it can be ensured that the detection range of the depth camera satisfies the recognition requirements and avoid the increase of power consumption caused by the premature startup of the depth camera.

In an embodiment, the first preset range is less than or equal to 5 m; and/or the second preset range is less than or equal to 3 m; and/or the third preset range is less than or equal to 1 m.

In this embodiment, according to the recognition and startup speeds of the radar, the low-power camera, and the depth camera, setting the maximum values of each preset range can ensure the reliable implementation of the method of the present disclosure and reduce power consumption.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies the user requirements is screened based on a predetermined algorithm. The screened recognition data that satisfies the user requirements is processed to determine the second preset range and/or the third preset range.

In this embodiment, the second preset range and/or the third preset range may also be determined based on historical data. The historical data can represent the user usage habits. The user habits are analyzed by methods such as neural networks, so as to determine timing for the startup and recognition of the low-power camera and/or the depth camera, thereby further reducing power consumption and improving recognition accuracy.

In an embodiment, the preset speed threshold V0 is less than or equal to 1.5 m/s; and/or the preset posture condition is that an angle at which a face of the target faces towards the low-power camera is less than or equal to 45°.

In this embodiment, the walking speed of a person is usually less than or equal to 1.5 m/s. The setting of the preset speed threshold V0 can effectively filter out objects and people using transportation means, thereby avoiding the frequent startup of the low-power camera. In addition, when the user walks towards the vehicle to prepare for boarding, the face of the user is usually oriented towards the vehicle. The setting of the preset posture condition can effectively filter out passing pedestrians, thereby avoiding the frequent startup of the depth camera.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies the user requirements is screened based on a predetermined algorithm. The screened recognition data that satisfies the user requirements is processed to determine the preset speed threshold V0.

In this embodiment, the preset speed threshold V0 may also be determined based on historical data. The historical data can represent the user usage habits. The user habits are analyzed by methods such as neural networks, so as to determine timing for the startup of the low-power camera, thereby further reducing power consumption and improving recognition accuracy.

In an embodiment, performing, by the depth camera, the facial recognition on the target within the third preset range, in response to determining that the posture of the target satisfies the preset posture condition, includes as follows. The posture of the target is determined to satisfy the preset posture condition, and a height and/or a body shape of the target is determined to satisfy a preset appearance condition. The facial recognition is performed on the target within the third preset range by the depth camera.

In this embodiment, the low-power camera may also perform a preliminary recognition of the height and body shape of the target, and in combination with the posture of the target, determine whether the target is the vehicle owner, thereby improving the recognition accuracy and further avoiding frequent startup of the depth camera to reduce power consumption.

In an embodiment, performing, by the depth camera, the facial recognition on the target within the third preset range, includes as follows. The facial recognition is performed on the target within the third preset range by the depth camera. Based on recognized facial information of the target, whether a recognized face of the target is a human face, whether the target is a living body, and whether the face of the target is consistent with preset facial information, are determined in sequence.

In this embodiment, the depth camera can perform face judgement, living-body recognition, and facial recognition on the target successively, thereby progressively improving the accuracy and reliability of recognition.

In an embodiment, performing, by the depth camera, the facial recognition on the target within the third preset range, further includes as follows. In response to performing, by the depth camera, the facial recognition on the target within the third preset range for more than a predetermined number of times without successful unlocking, and/or in response to performing, by the depth camera, the facial recognition on the target within a fourth preset range without successful unlocking, a warning signal is sent to a user and image data collected by the depth camera is sent synchronously to the user. The fourth preset range is smaller than or equal to the third preset range.

In this embodiment, when the depth camera fails to unlock after multiple facial recognition attempts or when the depth camera recognizes the target within a range too close to the vehicle, the safety of the vehicle may be affected. In such cases, the warning signal is sent to alert the vehicle owner, and the image data is sent synchronously, thereby improving the safety of the method.

In an embodiment, after issuing the unlocking instruction, the method further includes as follows. In an unlocked state, a palm vein image is obtained within the third preset range by cooperation of an infrared fill-light and the depth camera. In response to determining that the palm vein image matches a preset palm vein image, re-locking is performed.

In this embodiment, in the unlocked state, the palm vein of the user may also be recognized through the cooperation of the infrared fill-light and the depth camera, thereby providing the function for the user to quickly lock using a specific gesture, and enhancing the user experience.

In a second aspect, the present disclosure provides an unlocking/locking control apparatus. The unlocking/locking control apparatus includes a radar, a low-power camera, a depth camera, and a controller. The radar is configured to detect a target within a first preset range and obtain a moving speed of the target. The low-power camera is configured to perform posture recognition on the target within a second preset range. The depth camera is configured to perform facial recognition on the target within a third preset range. The controller is configured to control sequential startup of the radar, the low-power camera, and the depth camera, and configured to issue an unlocking instruction to unlock.

It can be understood that the unlocking/locking control apparatus provided in the second aspect of the present disclosure, under the control of the controller, can be used to implement the unlocking/locking control method provided in the first aspect. The unlocking/locking control apparatus of the present disclosure also improves the recognition accuracy and reduces the power consumption.

In an embodiment, the unlocking/locking control apparatus further includes a fill light. The fill light is configured to provide fill-light assistance for the low-power camera.

In an embodiment, the unlocking/locking control apparatus further includes a signal transmitter. The signal transmitter is configured to send a warning signal to the user and synchronously send the image data collected by the depth camera to the user when unlocking fails.

In an embodiment, the unlocking/locking control apparatus further includes a signal receiver. The signal receiver is configured to receive preset facial information input by the user or a system upgrade package.

In a third aspect, the present disclosure provides a vehicle. The vehicle is controlled by the unlocking/locking control method provided in the first aspect of the present disclosure; and/or the vehicle includes the unlocking/locking control apparatus provided in the second aspect of the present disclosure.

The vehicle provided in the third aspect of the present disclosure, which is controlled by the unlocking/locking control method provided in the first aspect of the present disclosure, and/or includes the unlocking/locking control apparatus provided in the second aspect of the present disclosure, can improve the safety of the vehicle and reduce the power consumption of the vehicle. Since the vehicle provided in the third aspect of the present disclosure is controlled by the unlocking/locking control method provided in any of the above embodiments, and/or includes the unlocking/locking control apparatus provided in any of the above embodiments, the vehicle provided in the third aspect of the present disclosure possesses all the possible beneficial effects of the unlocking/locking control method provided in any of the above embodiments, and/or possesses all the possible beneficial effects of the unlocking/locking control apparatus provided in any of the above embodiments.

### BRIEF DESCRIPTION OF THE DRAWINGS

To more clearly illustrate the technical solutions of embodiments of the present disclosure, the following briefly introduces the accompanying drawings required for the description of the embodiments of the present disclosure.
FIG. 1 is a schematic view of an operating scenario of a vehicle provided in embodiments of the present disclosure.
FIG. 2 is a schematic structural view of an internal framework of an unlocking/locking control apparatus provided in embodiments of the present disclosure.
FIG. 3 is a schematic view of a workflow of an unlocking/locking control method provided in embodiments of the present disclosure.
FIG. 4 is a schematic view of an operating process of detecting a target by a radar within a first preset range in a locked state according to an unlocking/locking control method provided in embodiments of the present disclosure.
FIG. 5 is a schematic view of one of operating processes of a low-power camera according to an unlocking/locking control method provided in embodiments of the present disclosure.
FIG. 6 is a schematic view of another of the operating processes of the low-power camera according to the unlocking/locking control method provided in the embodiments of the present disclosure.
FIG. 7 is a schematic structural view of another internal framework of the unlocking/locking control apparatus provided in the embodiments of the present disclosure.
FIG. 8 is a schematic view of an operating process of a depth camera according to an unlocking/locking control method provided in embodiments of the present disclosure.
FIG. 9 is a schematic view of a workflow of performing facial recognition on a target within a third preset range by a depth camera according to an unlocking/locking control method provided in embodiments of the present disclosure.
FIG. 10 is a schematic structural view of yet another internal framework of the unlocking/locking control apparatus provided in the embodiments of the present disclosure.
FIG. 11 is a schematic view of an operating process of determining whether a height of a target satisfies a preset appearance condition in the embodiments illustrated in FIG. 9 of the present disclosure.
FIG. 12 is a schematic view of a workflow of performing facial recognition on a target within a third preset range by a depth camera according to an unlocking/locking control method provided in embodiments of the present disclosure.
FIG. 13 is a schematic view of a workflow of performing facial recognition on a target within a third preset range by a depth camera according to an unlocking/locking control method provided in embodiments of the present disclosure.
FIG. 14 is a schematic view of a topology of one architecture of an unlocking/locking control apparatus provided in embodiments of the present disclosure.
FIG. 15 is a schematic view of a topology of another architecture of the unlocking/locking control apparatus provided in the embodiments of the present disclosure.
FIG. 16 is a schematic view of a workflow of performing facial recognition on a target within a third preset range by a depth camera according to an unlocking/locking control method provided in embodiments of the present disclosure.
FIG. 17 is a schematic structural view of yet another internal framework of the unlocking/locking control apparatus provided in the embodiments of the present disclosure.
FIG. 18 is a schematic view of a workflow of performing facial recognition on a target within a third preset range by a depth camera according to an unlocking/locking control method provided in embodiments of the present disclosure.
FIG. 19 is a schematic view of mounting of various functional structural components of an unlocking/locking control apparatus provided in embodiments of the present disclosure.
FIG. 20 is a schematic view of a travel route of a target recognized by an unlocking/locking control method provided in embodiments of the present disclosure.

### DETAILED DESCRIPTION

The technical solutions in embodiments of the present disclosure will be clearly and completely described below with reference to the accompanying drawings in the embodiments of the present disclosure. Obviously, the described embodiments are only a part of the embodiments of the present disclosure, rather than all of them. All other embodiments obtained by those of ordinary skill in the art based on the embodiments in the present disclosure without creative efforts shall fall within the protection scope of the present disclosure.

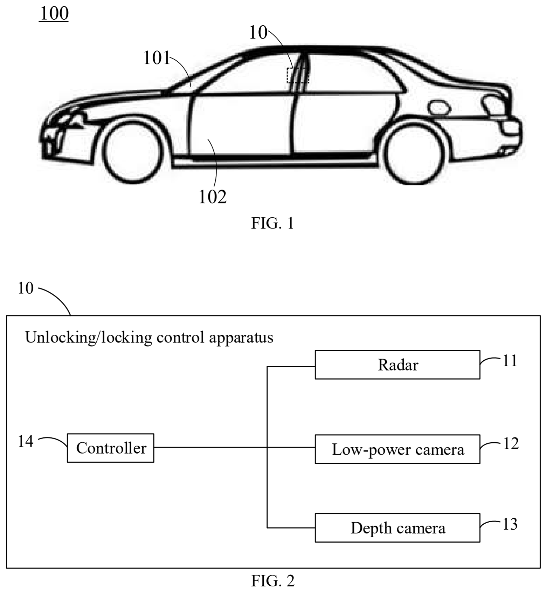

Reference can be made to FIG. 1, which is a schematic view of an operating scenario of a vehicle 100 provided in embodiments of the present disclosure. The vehicle 100 of the present disclosure includes a vehicle body 101 and a vehicle door 102. The vehicle door 102 is rotatably connected to the vehicle body 101. The vehicle body 101 is configured to implement functions such as driving, carrying passengers, and carrying goods of the vehicle 100. The vehicle door 102 can rotate relative to the vehicle body 101 to achieve opening or closing of the vehicle 100, so that users can enter the vehicle body 101 or get out of the vehicle body 101.

In an embodiment, the vehicle 100 includes an unlocking/locking control apparatus 10. The unlocking/locking control apparatus 10 may be disposed in the vehicle body 101. The unlocking/locking control apparatus 10 is configured to control the opening and closing state of the vehicle door 102, and can lock the vehicle door 102.

Exemplarily, when the unlocking/locking control apparatus 10 is started, the vehicle door 102 of the vehicle 100 can be opened, thereby exposing an opening in the vehicle body 101. The user can enter the vehicle body 101 through the opening to take or drive the vehicle 100, or exit the vehicle body 101 through the opening to leave the vehicle 100.

Exemplarily, when the unlocking/locking control apparatus 10 locks the vehicle door 102, the unlocking/locking control apparatus 10 can lock the closed state of the vehicle door 102, that is, the vehicle door 102 cannot rotate relative to the vehicle body 101 when the vehicle door 102 is closed. At this time, the vehicle door 102 and the vehicle body 101 cooperatively define a seating space, so as to protect users sitting inside the vehicle body 101, thereby improving the safety of the vehicle 100.

It may be noted that in the embodiments illustrated in FIG. 1, only exemplary positions where the unlocking/locking control apparatus 10 may be arranged in the vehicle 100 are introduced, but the actual structural shape and actual structural size of the unlocking/locking control apparatus 10 are not limited. For example, in the embodiments illustrated in FIG. 1, the unlocking/locking control apparatus 10 is not arranged on the window glass of the vehicle door 102 to avoid affecting the view of the window. In other embodiments of the present disclosure, the actual structural shape, size, arrangement position, etc., of the unlocking/locking control apparatus 10 can be adjusted according to actual design requirements.

In an embodiment, the vehicle 100 may also adopt an unlocking/locking control method to control the opening and closing state of the vehicle door 102 of the vehicle 100. The unlocking/locking control method provided in the embodiments of the present disclosure can be implemented by the unlocking/locking control apparatus 10.

In the embodiments illustrated in FIG. 1, only the unlocking/locking control apparatus 10 and the unlocking/locking control method are used to lock the vehicle door 102 of the vehicle 100 as an example for exemplary introduction, but it is not limited that the unlocking/locking control apparatus 10 and the unlocking/locking control method can only be used to lock the vehicle door 102 of the vehicle 100.

In other embodiments of the present disclosure, the unlocking/locking control apparatus 10 and the unlocking/locking control method may also, but are not limited to, be applied to scenarios such as access control, smart home appliances, or other transportation means. In the embodiments of the present disclosure, the specific usage environment of the unlocking/locking control apparatus 10 and the unlocking/locking control method of the present disclosure is not limited. In the embodiments provided in the specification of the present disclosure, the unlocking/locking control apparatus 10 applied to the vehicle 100 is taken as an example for introduction.

To facilitate the understanding of the control process of the vehicle door 102 of the vehicle 100 by the unlocking/locking control method provided by the embodiments of the present disclosure and the unlocking/locking control apparatus 10 provided by the embodiments of the present disclosure, the specification of the present disclosure introduces the unlocking/locking control method of the present disclosure in combination with the unlocking/locking control apparatus 10 synchronously.

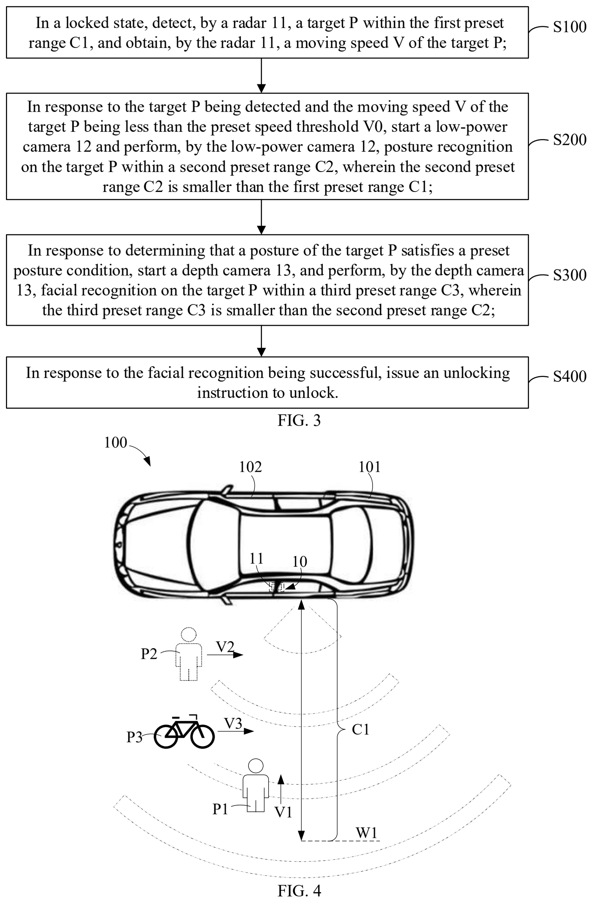

Reference can be made to FIG. 2 and FIG. 3 together, where FIG. 2 is a schematic view of an internal framework of an unlocking/locking control apparatus 10 provided in embodiments of the present disclosure, and FIG. 3 is a schematic view of a workflow of an unlocking/locking control method provided in embodiments of the present disclosure. As illustrated in FIG. 2, the unlocking/locking control apparatus 10 of the present disclosure includes a radar 11, a low-power camera 12 (e.g., Ultra Low Power Camera (ULPC)), a depth camera 13 (e.g., Time of Flight (ToF) depth camera), and a controller 14.

The controller 14 is configured to control sequential startup of the radar 11, the low-power camera 12, and the depth camera 13, and configured to issue an unlocking instruction to unlock, that is, to enable the vehicle door 102 of the vehicle 100 to be opened.

Specifically, the controller 14 is electrically connected to the radar 11, the low-power camera 12, and the depth camera 13 respectively, so as to enable to transmit control instructions to the radar 11, the low-power camera 12, and the depth camera 13 respectively, so that the radar 11, the low-power camera 12, and the depth camera 13 can respond based on the received control instructions. The controller 14 may be, but is not limited to, a Microcontroller Unit (MCU), etc.

It may be noted that in the embodiments illustrated in FIG. 2, only the example where the controller 14 is electrically connected to the radar 11, the low-power camera 12, and the depth camera 13 respectively is used for exemplary introduction. However, it is not limited that the controller 14 can only be electrically connected to the radar 11, the low-power camera 12, and the depth camera 13 of the unlocking/locking control apparatus 10 provided in the embodiments of the present disclosure. In other embodiments of the present disclosure, the controller 14 may also be electrically connected to other functional structural apparatuses of the unlocking/locking control apparatus 10, so as to control the cooperation among the various functional structures in the unlocking/locking control apparatus 10 to satisfy the preset requirements of the user.

As illustrated in FIG. 3, the unlocking/locking control method provided in the embodiments of the present disclosure begins with operations at S100.

At S100, in a locked state, a target P is detected by a radar within the first preset range C1, and a moving speed V of the target P is obtained by the radar.

Specifically, reference can be made to FIG. 4, which is a schematic view of an operating process of detecting a target P by a radar 11 within a first preset range C1 in a locked state according to an unlocking/locking control method provided in embodiments of the present disclosure. As illustrated in FIG. 4, the radar 11 remains in a detection state, so as to enable to detect in real time the target P that moves into the first preset range C1, and to obtain the moving speed V of the target P within the first preset range C1.

The first preset range C1 may be understood as a detection distance of the radar 11. The target P may be understood as a moving person or a person driving transportation means detected by the radar 11 within the first preset range C1. In addition, the moving speed V of the target P, that is, a walking speed of the target P within the first preset range C1 or a driving speed of the target P when the target P drives the transportation means, can be obtained through the radar 11, which is simply referred to as the "moving speed V" in the specification of the present disclosure.

The radar 11 remains the detection state to enable to detect in real time the target P that moves into the first preset range C1 and to obtain the moving speed V of the target P within the first preset range C1.

Exemplarily, within the first preset range C1, the target P detected by the radar 11 may be a person walking towards the vehicle 100, which is a first target P1 in the illustration of FIG. 4, and a moving speed of the first target P1 within the first preset range C1 obtained by the radar 11 is a first moving speed V1.

Exemplarily, within the first preset range C1, the target P detected by the radar 11 may be a person passing by the vehicle 100 on foot, which is a second target P2 in the illustration of FIG. 4, and a moving speed of the second target P2 within the first preset range C1 obtained by the radar 11 is a second moving speed V2.

Exemplarily, within the first preset range C1, the target P detected by the radar 11 may be a person passing by the vehicle 100 by cycling, which is a third target P3 in the illustration of FIG. 4, and a moving speed of the third target P3 within the first preset range C1 obtained by the radar 11 is a third moving speed V3.

It may be noted that in the embodiments illustrated in FIG. 4, only one possible type of the target P detected by the radar 11 within the first preset range C1 is taken as an example for exemplary introduction, but it is not limited that the number and type of the target P that can be detected by the radar 11 within the first preset range C1 in the embodiments of the present disclosure are limited to this, and it is also not limited that the moving direction of the target P is limited to that illustrated in FIG. 4.

For example, the target P may also, but is not limited to, pass by, approach or move away from the vehicle 100 in a running posture. The target P may also, but is not limited to, drive a car, a motorcycle or other transportation means to pass by, approach or move away from the vehicle 100.

In an embodiment, the first preset range C1 is less than or equal to W1. W1 may be understood as the maximum value of the first preset range C1, or may be understood that a distance between the target P detected by the radar 11 and the vehicle 100 is less than or equal to W1, that is, the maximum distance between the target P detected by the radar 11 and the vehicle 100 is W1. In the specification of the present disclosure, W1 is referred to as the "maximum value W1 of the first preset range C1".

In an embodiment, the first preset range C1 is less than or equal to 5 m.

For example, in a possible embodiment, the first preset range C1 may be, but is not limited to, less than or equal to 4 m.

It can be understood that in the unlocking/locking control method of the present disclosure, the radar 11 is adopted to detect the target P within the first preset range C1 and obtain the moving speed V of the target P. The radar 11 transmits the information of the target P detected within the first preset range C1 and the moving speed V of the target P to the controller 14, so that the controller 14 can control other functional structural components in the unlocking/locking control apparatus 10 to perform subsequent operations based on the information transmitted by the radar 11.

At S200, in response to the target P being detected and the moving speed V of the target P being less than the preset speed threshold V0, a low-power camera 12 is started and posture recognition is performed on the target P within a second preset range C2 by the low-power camera 12. The second preset range C2 is smaller than the first preset range C1.

The low-power camera 12 is configured to perform the posture recognition on the target P within the second preset range C2, that is, the low-power camera 12 can obtain the posture image information of the user within the second preset range C2. The posture of the target P may be understood as the head posture, gestures, walking posture or postures of other body parts of the user, etc., and may also be understood as the walking direction of the target P, etc.

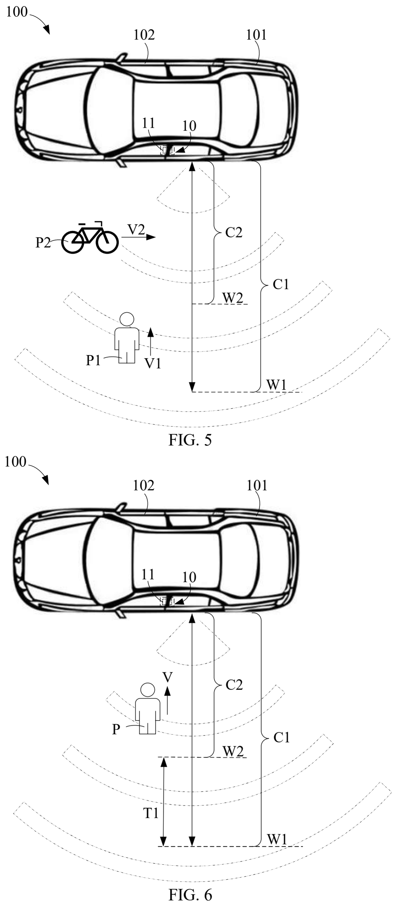

Specifically, reference can be made to FIG. 5, which is a schematic view of operating processes of a low-power camera 12 according to an unlocking/locking control method provided in embodiments of the present disclosure. The radar 11 detects the target P within the first preset range C1 and obtains the moving speed V of the target P.

It may be noted that in the embodiments illustrated in FIG. 5, after the radar 11 detects the target P within the first preset range C1, the radar 11 can automatically filter out the target P whose moving speed V is greater than the preset speed threshold V0. However, when the moving speed of the target P is less than the preset speed threshold V0, the radar 11 obtains the moving speed V of the target P and triggers the controller 14 to start the low-power camera 12.

That is, in the embodiments of the present disclosure, it is possible, but not limited thereto, for the radar 11 to determine, by itself, whether the moving speed V of the target P within the first preset range C1 is lower than the preset speed threshold V0.

In other embodiments of the present disclosure, after the radar 11 detects the target P within the first preset range C1 and obtains the moving speed V of the target P, the radar 11 may, but is not limited to, transmit the obtained position information, speed information, etc., of the target P to the controller 14, and determine, by the controller 14, whether the moving speed V of the target P is less than the preset speed threshold V0.

For example, when the radar 11 detects the target P within the first preset range C1, that is, when the distance between the target P and the vehicle 100 is less than the maximum value W1 of the first preset range C1, the radar 11 obtains the moving speed V of the target P synchronously, and may, but is not limited to, determine, by the controller 14, whether the moving speed V of the target P is less than the preset speed threshold V0.

When the radar 11 obtains the moving speed of the target P whose moving speed V is less than the preset speed threshold V0, or determines, by the controller 14, that the moving speed V of the target P is less than the preset speed threshold V0, the controller 14 can be triggered to send a startup signal to the low-power camera 12. Based on the received startup signal, the low-power camera 12 executes the corresponding startup program to start itself.

When the moving speed of the target P detected by the radar 11 is greater than the preset speed threshold V0, the controller 14 does not send a startup signal to the low-power camera 12, so as to prevent invalid startup of the low-power camera 12 due to false triggering of the low-power camera 12 by a person driving the transportation means or other persons, thereby improving the startup effectiveness of the low-power camera 12 and reducing the power consumption of the low-power camera 12.

For example, as illustrated in FIG. 5, within the first preset range C1, the radar 11 automatically filters out the target P whose moving speed V is greater than the preset speed threshold V0, and obtains the target P whose moving speed V is less than the preset speed threshold V0, which is illustrated as the first target P1 in FIG. 5. The first target P1 has the first moving speed V1. At this time, the radar 11 obtains the first moving speed V1 of the first target P1 and triggers the controller 14 to send a startup signal to the low-power camera 12 to start the low-power camera 12.

For example, as illustrated in FIG. 5, within the first preset range C1, the radar 11 detects the second target P2, and the radar 11 obtains that the second target P2 has the second moving speed V2. At this time, after the radar 11 transmits data information of the second moving speed V2 of the second target P2 to the controller 14, the radar 11 determines, by the controller 14, that the second moving speed V2 of the second target P2 is greater than the preset speed threshold V0. For example, the second target P2 may be a person riding a bicycle or a person driving other transportation means. At this time, the controller 14 determines that the second moving speed V2 of the second target P2 does not satisfy the condition for starting the low-power camera 12, and does not send a startup signal to the low-power camera 12.

It can be understood that determining whether the moving speed V of the target P detected by the radar 11 satisfies the preset speed threshold V0 can allow the radar 11 to ignore or filter out the target P whose moving speed V detected by the radar 11 is greater than the preset speed threshold V0, thereby avoiding the frequent startup of the low-power camera 12. Meanwhile, by filtering out objects moving excessively fast or people using transportation means, the accuracy and efficiency of the unlocking/locking control method of the present disclosure in distinguishing users who need to open the vehicle door 102 of the vehicle 100 can be improved, and the power consumption can be reduced.

That is, the radar 11 detects the target P within the first preset range C1 and obtains the moving speed V of the target P. If the moving speed V of the target P is greater than the preset speed threshold V0 of the unlocking/locking control method of the present disclosure, it is determined that the target P is a person who does not need to open the vehicle door 102 of the vehicle 100, and the person who does not need to open the vehicle door 102 of the vehicle 100 is excluded as interference, and the target P is ignored or filtered out. Therefore, the low-power camera 12 is prevented from being falsely triggered by the person passing by or the person who does not need to open the vehicle door 102 of the vehicle 100 or the person driving the vehicle, that is, the frequent startup of the low-power camera 12 is prevented. Thus, the user who needs to open the vehicle door 102 can be accurately determined, so that the accuracy of startup of the low-power camera 12 can be improved, thereby improving the unlocking accuracy and use effect of the unlocking/locking control method of the present disclosure, and improving the user experience and the safety of the vehicle 100.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies the user requirements is screened based on a predetermined algorithm. The screened recognition data that satisfies the user requirements is processed to determine the preset speed threshold V0.

Specifically, each time the user triggers and starts the low-power camera 12 during opening the vehicle door 102 using the unlocking/locking control method of the present disclosure, the radar 11 obtains information such as a present moving speed V. Each time the radar 11 obtains the moving speed V of the user upon triggering and starting the low-power camera 12, a corresponding historical data is stored. After the user opens the vehicle door 102 multiple times using the unlocking/locking control method of the present disclosure, multiple sets of historical data are accumulated.

Screening the recognition data that satisfies the user requirements based on the predetermined algorithm can be understood as, but not limited to, using a neural network or other algorithms to screen multiple sets of historical data obtained when the user starts the low-power camera 12, so as to screen out historical data that satisfies the requirements of low power consumption, short waiting time, or other user requirements. Then, but not limited to, using the average value or other possible data processing methods to process the screened historical data, that is, the screened recognition data that satisfies the user requirements is processed, so that the preset speed threshold V0 can be determined.

It can be understood that the multiple sets of historical data accumulated when the user triggers and starts the low-power camera 12 can represent the user usage habits when using the unlocking/locking control method of the present disclosure to open the vehicle door 102 of the vehicle 100. The user habits may be analyzed, but not limited to, by using a neural network to determine the timing for the radar 11 to start the low-power camera 12, thereby further reducing the power consumption and improving recognition accuracy.

Meanwhile, determining the preset speed threshold V0 based on the multiple sets of historical data when the user starts the low-power camera 12 can also improve the adaptability of the unlocking/locking control method of the present disclosure to the user, achieve the effect of passive unlocking for the user by the unlocking/locking control method of the present disclosure, thereby further improving the usage effect and usage experience of the user on the unlocking/locking control method of the present disclosure.

In an embodiment, the preset speed threshold V0 is less than or equal to 1.5 m/s. For example, the preset speed threshold V0 may be 1.5 m/s, or may be 1.4 m/s, etc.

It can be understood that under normal circumstances, when a user opens the vehicle door 102 of the vehicle 100, the user generally approaches the vehicle 100 on foot, and the walking speed of a person is usually less than or equal to 1.5 m/s. Therefore, by setting the preset speed threshold V0 to be less than or equal to 1.5 m/s, objects and people using transportation means can be effectively filtered out, thereby reducing the number of false triggering of the low-power camera 12, and avoiding the adverse impact on the operation performance of the low-power camera 12 caused by the frequent startup of the low-power camera 12.

In an embodiment, before detecting, by the radar, the target within the first preset range and obtaining, by the radar, the moving speed of the target, in the locked state, the method further includes as follows. Multiple sets of recognition data are collected, and an initial preset speed threshold is adjusted based on the collected recognition data, so as to determine the preset speed threshold V0.

Specifically, when the unlocking/locking control method or the unlocking/locking control apparatus 10 of the present disclosure is initially used to recognize the user and unlock, the low-power camera 12 may first be triggered based on the initial preset speed threshold. Then, the radar 11 may obtain multiple sets of historical data accumulated each time the user triggers and starts the low-power camera 12, and the initial preset speed threshold may be continuously adjusted based on the obtained multiple sets of historical data, so that the initial preset speed threshold approaches or conforms to the user habits, and finally the preset speed threshold V0 is obtained. Thus, the accuracy of the preset speed threshold V0 can be improved, and the effect of the passive unlocking of the unlocking/locking control method or the unlocking/locking control apparatus 10 of the present disclosure can be further enhanced.

Further, reference can be made to FIG. 6, which is a schematic view of operating processes of the low-power camera 12 according to the unlocking/locking control method provided in the embodiments of the present disclosure. When the radar 11 detects the target P within the second preset range C2, the radar 11 transmits a detection signal to the controller 14. After receiving the signal from the radar 11 indicating that the target P is detected within the second preset range C2, the controller 14 sends a recognition signal to the low-power camera 12, so as to control the low-power camera 12 to begin to perform posture recognition on the target P.

The second preset range C2 is smaller than the first preset range C1.

The second preset range C2 is less than or equal to W2. W2 may be understood as the maximum value of the second preset range C2. In the specification of the present disclosure, W2 is referred to as "the maximum value W2 of the second preset range C2". That the second preset range C2 is smaller than the first preset range C1 may be understood as that the maximum value W2 of the second preset range C2 is less than the maximum value W1 of the first preset range C1.

Exemplarily, the radar 11 can transmit the distance information of the target P relative to the vehicle 100 to the controller 14. In addition, the radar 11 can, but is not limited to, determine whether the distance between the target P and the vehicle 100 is within the second preset range C2 by the controller 14, that is, the radar 11 can determine whether the distance of the target P relative to the vehicle 100 is less than the maximum value W2 of the second preset range C2 by the controller 14.

If it is determined that the target P is within the second preset range C2, that is, the distance between the target P and the vehicle 100 is less than the second preset range C2, the controller 14 is triggered to start the low-power camera 12 to begin to perform posture recognition on the target P.

The low-power camera 12 can perform the posture recognition on the target P, which may be understood as the head posture, gestures, walking posture, or postures of other body parts of the target P, and may also be understood as the walking direction of the target P, etc.

For example, the low-power camera 12 can recognize a head angle of the target P, for use in determining whether the target P has an action or posture for preparing to open the door.

The low-power camera 12 can also recognize an outline of the target P for identification. The outline can be understood as contour features such as the height and body shape of the target P, for use in determining whether the target P is a person, or in providing auxiliary reference information for determining whether the recognized target P is the owner of the vehicle 100, thereby improving the recognition accuracy and reliability of the low-power camera 12.

In an embodiment, a duration from a moment at which the radar 11 detects the target P to a moment at which the low-power camera 12 is started is T1. The maximum value W2 of the second preset range C2 satisfies: W2 ≥ W1 - V0 × T1.

Specifically, as illustrated in FIG. 6, a process from the detection of the target P by the radar 11 to the completion of the startup of the low-power camera 12 includes the following. The radar 11 detects that the target P moves to a position of the maximum value W1 of the first preset range C1, and synchronously obtains the moving speed V of the target P at this time. The radar 11 transmits the obtained speed information of the target P whose moving speed V is less than the preset speed threshold V0 to the controller 14, and triggers the controller 14 to send a startup signal to the low-power camera 12. The low-power camera 12 receives the startup signal sent by the controller 14, and loads its internal startup program to start. Thus, the startup of the low-power camera 12 is completed.

In the specification of the present disclosure, the duration required from the moment at which the radar 11 detects the target P to the moment at which the low-power camera 12 completes startup is illustrated as T1 in FIG. 6. That is, the duration required from the moment at which the radar 11 detects that the target P moves to the position of the maximum value W1 of the first preset range C1 and triggers the low-power camera 12 to start until the low-power camera 12 completes startup is T1.

It can be understood that when setting the maximum value W2 of the second preset range C2, by referring to the time consumption of this process in combination with the moving speed V of the target P, it can be ensured that the detection range of the low-power camera 12 satisfies the recognition requirements and avoids the increase of power consumption caused by the premature startup of the low-power camera 12.

In an embodiment, the time for the radar 11 to detect the target P and obtain the moving speed V of the target P may be, but is not limited to, 180 ms.

In an embodiment, the loading time of the low-power camera 12, that is, the startup time of the low-power camera 12, may be, but is not limited to, 520 ms.

In an embodiment, the second preset range C2 is less than or equal to 3 m. It can be understood that the second preset range C2 being less than or equal to 3 m means that the distance between any position within the second preset range C2 detected by the radar 11 and the vehicle 100 is less than or equal to 3 m. It can also be understood that the maximum value W2 of the second preset range C2 is less than or equal to 3 m.

It can be understood that to ensure the recognition accuracy and reliability of the low-power camera 12, in this embodiment, the second preset range C2 is designed to be less than or equal to 3 m. That is, when the maximum relative distance between the target P and the vehicle 100 is less than or equal to 3 m, the accuracy and reliability of the low-power camera 12 in recognizing the posture of the target P can be ensured. Furthermore, the effectiveness and accuracy of the unlocking/locking control method of the present disclosure can be improved, so as to enhance the user experience.

It may be noted that in the embodiments of the present disclosure, only the case where the second preset range C2 is less than or equal to 3 m is taken as an example for exemplary introduction, but it is not limited that the second preset range C2 detected by the radar 11 of the present disclosure can only be set to be less than or equal to 3 m.

In other embodiments of the present disclosure, the size of the second preset range C2 can also be adjusted according to the moving speed of the target P detected by the radar 11 or according to an environment in which the target P is located as detected by the radar 11.

When the radar 11 detects the target P, a distance for waking up the low-power camera 12 is adjusted according to different moving speeds V of the detected target P, or according to different environments, so that the adaptability and adaptation effect of the unlocking/locking control method of the present disclosure can be improved, thereby further improving a passive unlocking effect of the unlocking/locking control method or the unlocking/locking control apparatus 10 of the present disclosure, and enhancing the user experience.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies user requirements is screened based on a predetermined algorithm. The screened recognition data that satisfies the user requirements is processed to determine the second preset range C2.

Specifically, each time the user opens the vehicle door 102 using the unlocking/locking control method of the present disclosure, the duration required from the detection of the target P by the radar 11 to the completion of the startup of the low-power camera 12, or the distance between the user and the vehicle 100 at this time, or the moving speed of the user at this time, and other relevant information, form corresponding historical data to be stored.

When the user opens the vehicle door 102 multiple times using the unlocking/locking control method of the present disclosure, multiple sets of historical data are generated.

Screening the recognition data that satisfies the user requirements based on the predetermined algorithm can be understood as that, but not limited to, using a neural network or other algorithms to screen the obtained multiple sets of historical data to screen out the historical data that satisfies the requirements of low power consumption, short waiting time, or other user requirements. Then, but not limited to, using the average value or other possible data processing methods to process the screened historical data, that is, the screened recognition data that satisfies the user requirements is processed, so that the second preset range C2 can be determined.

It can be understood that the multiple sets of historical data, formed by the duration required from the detection of the target P by the radar 11 to the completion of the startup of the low-power camera 12 for multiple times, can represent the user usage habits when using the unlocking/locking control method of the present disclosure to open the vehicle door 102 of the vehicle 100. Based on the obtained multiple sets of historical data, the user habits can be analyzed, but not limited to, using a neural network and other methods to determine the duration required from the detection of the target P to the completion of the startup of the low-power camera 12, thereby further reducing the power consumption and improving the recognition accuracy.

Meanwhile, by determining the second preset range C2 based on the multiple sets of historical data of the duration required from the detection of the target P by the radar 11 to the completion of the startup of the low-power camera 12 for multiple times, the adaptability of the unlocking/locking control method of the present disclosure to the user can also be improved, so that the passive unlocking effect for the user using the unlocking/locking control method of the present disclosure can be achieved, thereby further improving the usage effect and usage experience of the user on the unlocking/locking control method of the present disclosure.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies user requirements is screened based on a predetermined algorithm. The screened recognition data that satisfies the user requirements is processed to determine the second preset range C2.

Specifically, when the unlocking/locking control method or the unlocking/locking control apparatus 10 of the present disclosure is initially used to recognize the user and unlock, the low-power camera 12 can be first started to begin recognition based on an initial second preset range. The initial second preset range can be understood as the initially set second preset range.

Then, multiple sets of historical data can be formed by the duration required from the detection of the target P by the radar 11 to the completion of the startup of the low-power camera 12 for multiple times, and the initial second preset range can be continuously adjusted based on the obtained multiple sets of historical data, so that the initial second preset range approaches or conforms to the user habits, and finally the second preset range is obtained.

By continuously adjusting the initial second preset range through the collected recognition data to determine the second preset range C2, the accuracy of the second preset range C2 can be improved, and the passive unlocking effect of the unlocking/locking control method or the unlocking/locking control apparatus 10 of the present disclosure can be further enhanced.

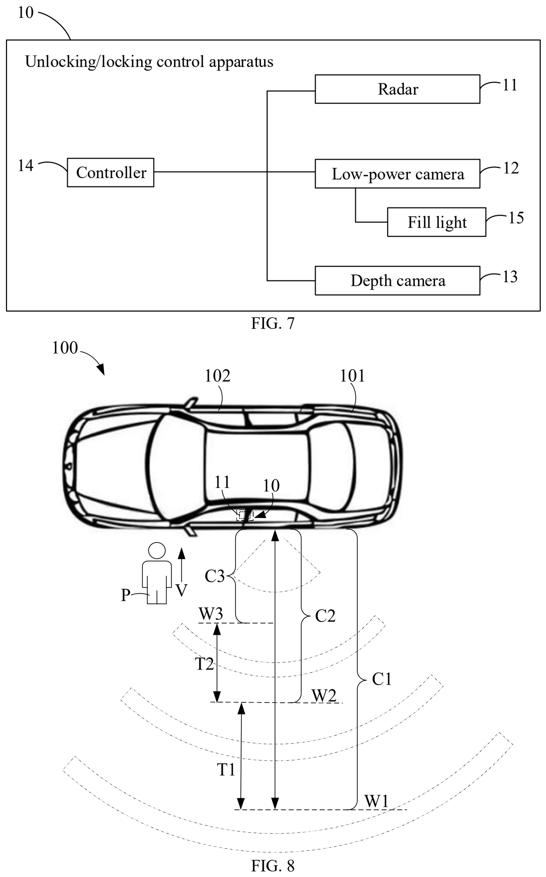

In an embodiment, reference can be made to FIG. 7, which is a schematic structural view of another internal framework of the unlocking/locking control apparatus 10 provided in the embodiments of the present disclosure. As illustrated in FIG. 7, the unlocking/locking control apparatus 10 includes a fill light 15. The fill light 15 is disposed corresponding to the low-power camera 12, so as to provide fill-light assistance for the low-power camera 12.

Specifically, when the low-power camera 12 operates in environments such as nighttime, a basement, dim surroundings, or other environments with insufficient lighting, the fill light 15 can provide supplementary light for the low-power camera 12 to obtain the posture image information of the target P, so as to satisfy the operation requirements of the low-power camera 12, thereby improving the accuracy and precision of the posture recognition of the target P by the low-power camera 12 and enhancing the user experience.

In an embodiment, when an illuminance of an environment in which the vehicle 100 is located is less than 10 lux, the controller 14 can control the fill light 15 to be started, so as to provide supplementary light respectively for the low-power camera 12 to perform posture recognition on the target P or for the depth camera 13 to perform facial recognition on the target P.

At S300, in response to determining that a posture of the target P satisfies a preset posture condition, a depth camera 13 is started, and facial recognition is performed on the target P within a third preset range C3 by the depth camera 13. The third preset range C3 is smaller than the second preset range C2.

Specifically, reference can be made to FIG. 2, FIG. 3, and FIG. 8, where FIG. 8 is a schematic view of an operating process of a depth camera 13 according to an unlocking/locking control method provided in embodiments of the present disclosure. The depth camera 13 is configured to perform the facial recognition on the target P within the third preset range C3, that is, it can be understood as obtaining the facial feature image information of the target P through the depth camera 13.

When the radar 11 detects the target P within the second preset range C2 and the low-power camera 12 is started by the controller 14, the low-power camera 12 begins to recognize the posture of the target P.

After the low-power camera 12 recognizes the posture of the target P, the low-power camera 12 can process the recognized posture information of the target P by itself. That is, the low-power camera 12 recognizes and obtains the posture information of the target P and can determine by itself whether the posture of the target P satisfies the preset posture condition.

If the low-power camera 12 determines that the posture of the target P satisfies the preset posture condition, the controller 14 is triggered to send a startup signal to the depth camera 13. After receiving the startup signal sent by the controller 14, the depth camera 13 is started.

It may be noted that in the embodiments of the present disclosure, only the example where the low-power camera 12 can determine by itself whether the recognized posture of the target P satisfies the preset posture condition is used for exemplary illustration, but it does not limit the way of processing the recognized posture information of the target P in the present disclosure to this. In other embodiments of the present disclosure, the controller 14 can also process and determine the obtained posture information of the target P.

Exemplarily, after the low-power camera 12 recognizes the posture of the target P, the low-power camera 12 can also transmit the recognized posture information, etc., to the controller 14. The controller 14 receives the posture information of the target P transmitted by the low-power camera 12 and determines whether the posture of the target P recognized by the low-power camera 12 satisfies the preset posture condition.

If the controller 14 determines that the posture of the target P satisfies the preset posture condition, the controller 14 sends a startup signal to the depth camera 13. After receiving the startup signal sent by the controller 14, the depth camera 13 is started.

After the radar 11 detects the target P within the third preset range C3, for example, the target P may continue to move towards the vehicle 100 and the distance between the target P and the vehicle 100 continuously decreases to be less than the third preset range C3, which triggers the controller 14 to send a recognition signal to the depth camera 13.

After receiving the recognition signal sent by the controller 14, the depth camera 13 begins to perform the facial recognition on the target P.

The depth camera 13 performing the facial recognition on the target P can be understood as the depth camera 13 recognizing the facial features of the target P, which may but is not limited to recognizing facial parts such as the pupils of the eyes, the tip of the nose, the nostrils, the lips, and the eyebrows of the target P, and can also recognize the overall facial contour of the target P. When the face of the target P is partially blocked, the depth camera 13 can also recognize the exposed partial facial features of the target P.

In an embodiment, the third preset range C3 is smaller than the second preset range C2.

The third preset range C3 is less than or equal to W3. W3 may be understood as the maximum value of the third preset range C3. In the specification of the present disclosure, W3 is referred to as "the maximum value W3 of the third preset range C3". The third preset range C3 is smaller than the second preset range C2, which can be understood as the maximum value W3 of the third preset range C3 being less than the maximum value W2 of the second preset range C2.

In an embodiment, the preset posture condition is that an angle at which a face of the target P faces towards the low-power camera 12 is less than or equal to 45°.

Specifically, when the low-power camera 12 performs the posture recognition on the target P, the low-power camera 12 can recognize the angle of the head of the target P relative to the low-power camera 12. When the target P moves in a direction closer to the vehicle 100 and needs to open the vehicle door 102 of the vehicle 100, the face of the target P usually faces towards the vehicle 100. Therefore, it can also be understood as recognizing the angle of the face of the target P relative to the low-power camera 12.

After the low-power camera 12 obtains the angle information of the head of the target P or the face of the target P facing towards the vehicle 100 relative to the low-power camera 12, whether the obtained angle of the head of the target P or the face of the target P facing towards the vehicle 100 relative to the low-power camera 12 satisfies the preset posture condition, can be determined by the low-power camera 12 itself, or by the controller 14 after the low-power camera 12 transmits the obtained angle information to the controller 14.

That is, whether the angle of the head of the target P or the face of the target P facing towards the vehicle 100 relative to the low-power camera 12 is less than or equal to 45°, can be determined by the low-power camera 12 itself or the controller 14.

If the preset posture condition is that the angle at which the face of the target P faces towards the low-power camera 12 is less than or equal to 45°, then the controller 14 is triggered to send a startup signal to the depth camera 13 to start the depth camera 13.

It can be understood that by setting a condition that the angle at which the face of the target P faces towards the low-power camera 12 is less than or equal to 45° as the preset condition, and when the low-power camera 12 recognizes that the posture of the target P satisfies the preset condition, the depth camera 13 is started by the controller 14, the depth camera 13 can be started in time for the target P who needs to open the vehicle door 102 of the vehicle 100 and perform the facial recognition for unlocking, interference such as other pedestrians passing by the vehicle 100, pedestrians driving transportation means, or people without intention to open the vehicle door 102 of the vehicle 100 can be excluded. That is, the passing pedestrians can be effectively filtered out, so as to reduce the false triggering times of the depth camera 13, and avoid the adverse impact on the operation performance of the depth camera 13 caused by the frequent startup of the depth camera 13, thereby further improving the accuracy and effectiveness of the startup of the depth camera 13.

In an embodiment, a duration from the moment at which the low-power camera 12 is started to a moment at which the depth camera 13 is started is T2. W3 satisfies: W3 ≥ W2 - V0 × T2.

Specifically, as illustrated in FIG. 8, the process from the beginning of recognition by the low-power camera 12 to the completion of the startup of the depth camera 13 includes as follows. The low-power camera 12 recognizes the posture of the target P, and determines whether the posture information of the target P satisfies the preset posture condition. If the recognized posture of the target P satisfies the preset posture condition, the controller 14 is triggered to send a startup signal to the depth camera 13. The depth camera 13 receives the startup signal sent by the controller 14, and loads its internal startup program to start. Thus, the startup of the depth camera 13 is completed.

In an embodiment, the time required for the low-power camera 12 to recognize the posture of the target P may be, but is not limited to, 280 ms.

In an embodiment, the time for the depth camera 13 to load its internal program to start, that is, the startup time of the depth camera 13, may be, but is not limited to, 607 ms.

In the specification of the present disclosure, a duration from a moment at which the low-power camera 12 begins to recognize to a moment at which the startup of the depth camera 13 is completed is illustrated as T2 in FIG. 8. That is, the time required from the beginning of recognition by the low-power camera 12 and the triggering of the startup of the depth camera 13 until the completion of the startup of the depth camera 13 is T2.

It can be understood that when setting the third preset range C3, by referring to the time consumption of this process in combination with the moving speed V of the target P, it can be ensured that the detection range of the depth camera 13 satisfies the recognition requirements and avoids the increase of power consumption caused by the premature startup of the depth camera 13.

In an embodiment, the third preset range C3 is less than or equal to 1 m.

To ensure the recognition accuracy and reliability of the depth camera 13, in this embodiment, the third preset range C3 is set to be less than or equal to 1 m. That is, when the maximum relative distance between the target P and the vehicle 100 is less than or equal to 1 m, the accuracy and reliability of the depth camera 13 in recognizing the facial features of the target P can be guaranteed, so that the effectiveness and accuracy of the unlocking/locking control method of the present disclosure can be improved, thereby improving the user experience.

Meanwhile, in the embodiments of the present disclosure, the first preset range C1, the second preset range C2, and the third preset range C3 are respectively set based on the recognition and startup speeds of the radar 11, the low-power camera 12, and the depth camera 13. Therefore, the recognition accuracy and reliability of the radar 11, the low-power camera 12, and the depth camera 13 can be improved, thereby further enhancing the reliability of the unlocking/locking control method of the present disclosure, and saving power consumption.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies user requirements is screened based on a predetermined algorithm. The screened recognition data that satisfies the user requirements is processed to determine the third preset range C3.

Specifically, each time the user opens the vehicle door 102 using the unlocking/locking control method of the present disclosure, the duration required for triggering the depth camera 13 to complete startup after the low-power camera 12 completes posture recognition on the user, or the distance of the user relative to the vehicle 100 at this time, or the moving speed of the user at this time, or other information, form corresponding historical data to be stored. When the user opens the vehicle door 102 multiple times using the unlocking/locking control method of the present disclosure, multiple sets of historical data are accumulated.

Screening the recognition data that satisfies the user requirements based on the predetermined algorithm can be understood as, but not limited to, using a neural network or other algorithms to screen the historical data to screen out the historical data that satisfies the requirements of low power consumption, short waiting time, or other user requirements. Then, but not limited to, using the average value or other possible data processing methods to process the screened historical data, that is, the screened recognition data that satisfies the user requirements is processed, so that the third preset range C3 can be determined.

It can be understood that the historical data, formed each time the low-power camera 12 completes the recognition of the posture of the target P and triggers the depth camera 13 to complete startup, can represent the user usage habits when using the unlocking/locking control method of the present disclosure to open the vehicle door 102 of the vehicle 100. Based on the accumulated multiple sets of historical data, the user habits can be analyzed, but not limited to, using a neural network to determine the duration required from the detection of the target P to the completion of the startup of the low-power camera 12, thereby further reducing power consumption and improving recognition accuracy.

Meanwhile, by determining the third preset range C3 based on the multiple sets of historical data, the adaptability of the unlocking/locking control method of the present disclosure to the user can be improved, so that the passive unlocking effect for the user using the unlocking/locking control method of the present disclosure can be achieved, thereby further improving the usage effect and usage experience of the user on the unlocking/locking control method of the present disclosure.

In an embodiment, before detecting, by the radar, the target within the first preset range and obtaining, by the radar, the moving speed of the target, in the locked state, the method further includes as follows. Multiple sets of recognition data are collected, and recognition data of the multiple sets of recognition data that satisfies user requirements is screened based on a predetermined algorithm. The screened recognition data that satisfies the user requirements is processed to determine the third preset range C3.

Specifically, when the unlocking/locking control method or the unlocking/locking control apparatus 10 of the present disclosure is initially used to recognize the user and unlock, the depth camera 13 can be first started based on an initial third preset range. The initial third preset range can be understood as the initially set third preset range.

Then, the historical data can be formed each time the low-power camera 12 completes the recognition of the posture of the target P and triggers the depth camera 13 to complete startup, and the initial third preset range can be continuously adjusted based on the obtained multiple sets of historical data, so that the initial third preset range approaches or conforms to the user habits, and finally the third preset range C3 is obtained.

By continuously adjusting the initial third preset range through the collected recognition data to determine the third preset range C3, the accuracy of the third preset range C3 can be improved, and the passive unlocking effect of the unlocking/locking control method or the unlocking/locking control apparatus 10 of the present disclosure can be further enhanced, so as to improve the user experience.

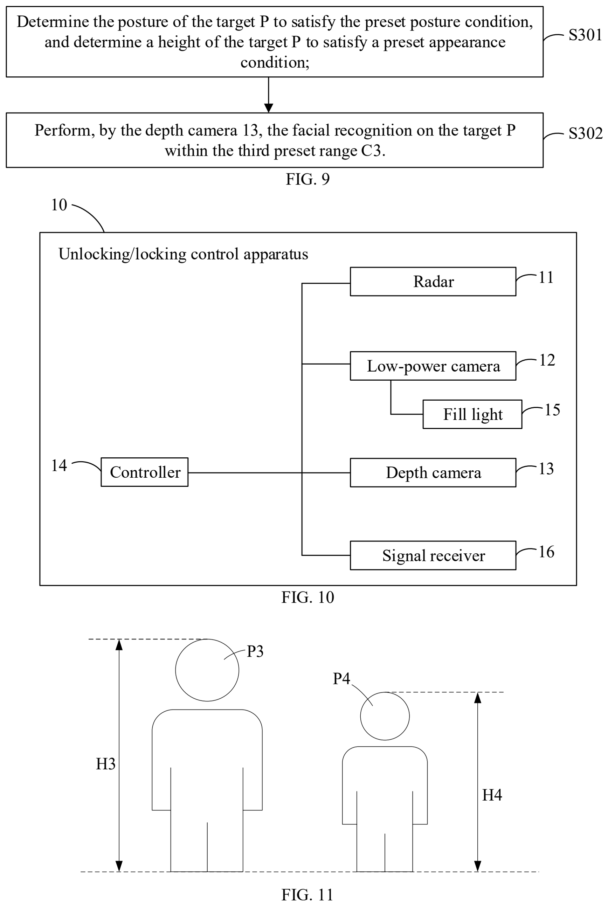

In an embodiment, reference can be made to FIG. 9, which is a schematic view of a workflow of performing facial recognition on a target P within a third preset range C3 by a depth camera 13 according to an unlocking/locking control method provided in embodiments of the present disclosure. As illustrated in FIG. 9, "in response to determining that the posture of the target P satisfies the preset posture condition, the facial recognition is performed on the target P within the third preset range C3 by the depth camera 13" at S300 includes as follows.

At S301, the posture of the target P is determined to satisfy the preset posture condition, and a height of the target P is determined to satisfy a preset appearance condition.

Specifically, when the target P moves into the second preset range C2 and triggers the low-power camera 12 to begin to recognize the posture of the target P, the low-power camera 12 can recognize the head posture information and height information of the target P, and determine whether the posture of the target P satisfies the preset posture condition based on the posture information of the target P. If the posture of the target P satisfies the preset posture condition, whether the height of the target P satisfies the preset appearance condition can be further determined based on the height information of the target P.

In an embodiment, reference can be made to FIG. 10, which is a schematic structural view of yet another internal framework of the unlocking/locking control apparatus 10 provided in the embodiments of the present disclosure. As illustrated in FIG. 10, the unlocking/locking control apparatus 10 includes a signal receiver 16. The signal receiver 16 is configured to receive preset facial information or preset appearance condition information input by the user, or a system upgrade package.

Specifically, the user can transmit the preset data input by the user to the signal receiver 16 through wired, wireless or other possible data transmission methods without limitation.

In addition, the signal receiver 16 can be electrically connected to the controller 14 to transmit the preset data input by the user and received by the signal receiver 16 to the controller 14, so that the controller 14 can control each functional structural component in the unlocking/locking control apparatus 10 to execute corresponding instructions based on the received preset data, thereby enabling the unlocking/locking control apparatus 10 provided in the embodiments of the present disclosure to satisfy the preset requirements of the user, and improving the user experience.

The preset data input by the user may include, but is not limited to, data such as the preset facial information, the preset appearance condition information, or the system upgrade package.

Exemplarily, the preset facial information input by the user can be understood as the facial feature information of the user themselves or of a user authorized to open the vehicle door 102 of the vehicle 100, which the user can, but is not limited to, input via electronic devices such as a smartphone, smart band, tablet, or computer. Then, the input facial feature information is transmitted to the signal receiver 16 through wired, wireless, or other possible data transmission methods. Therefore, after the unlocking/locking control apparatus 10 recognizes the target P, the unlocking/locking control apparatus 10 can compare the recognized target P with the preset facial information previously input by the user to determine whether the recognized target P is the owner of the vehicle 100 or the user authorized to open the vehicle door 102 of the vehicle 100, and upon successful comparison, the unlocking/locking method or the unlocking/locking apparatus executes the unlocking instruction.

Exemplarily, the user can also input in advance, via the signal receiver 16, the height, body shape, and other appearance contour information of the owner of the vehicle 100 or the user authorized to open the vehicle door 102 of the vehicle 100.

Further, reference can be made to FIG. 11, which is a schematic view of an operating process of determining whether a height of a target P satisfies a preset appearance condition in the embodiments illustrated in FIG. 9 of the present disclosure. According to the unlocking/locking control method of the present disclosure, the height information of the owner of the vehicle 100 or the user authorized to open the vehicle 100 can be input in advance, to serve as the basis for the controller 14 to determine whether the height of the target P satisfies the preset appearance condition.

As illustrated in FIG. 11, the low-power camera 12 respectively recognizes the posture and height of the third target P3 and the posture and height of the fourth target P4, and respectively obtains the posture information and height information of the third target P3 and the posture information and height information of the fourth target P4. In the illustration of FIG. 11, the height of the third target P3 is illustrated as H3, and the height of the fourth target P4 is illustrated as H4.

After the low-power camera 12 obtains the posture information and height information of the third target P3, whether the posture of the third target P3 satisfies the preset posture condition, can be determined by the low-power camera 12 itself, or by the controller 14 after the low-power camera 12 transmits the obtained information to the controller 14. If the posture of the third target P3 satisfies the preset posture condition, whether the height H3 of the third target P3 satisfies the preset appearance condition is continuously determined.

If the height H3 of the third target P3 is equal to the height of any one of the owner or the user authorized to open the vehicle door 102 of the vehicle 100 input in advance, or is within the allowable error range, the height H3 of the third target P3 is determined to satisfy the preset appearance condition. The subsequent operations of the unlocking/locking control method of the present disclosure will then be performed.

After the low-power camera 12 obtains the posture information and height information of the fourth target P4, the low-power camera 12 first determines whether the posture of the fourth target P4 satisfies the preset posture condition. If the posture of the fourth target P4 satisfies the preset posture condition, whether the height H4 of the fourth target P4 satisfies the preset appearance condition is continuously determined.

If the height H4 of the fourth target P4 is not equal to the height of any one of the owner or the user authorized to open the vehicle door 102 of the vehicle 100 input in advance or the difference between the two exceeds the allowable error range, the height H4 of the fourth target P4 is determined not to satisfy the preset appearance condition, and the subsequent operations of the unlocking/locking control method of the present disclosure will not be performed.

At S302, the facial recognition is performed on the target P within the third preset range C3 by the depth camera 13.

Specifically, when the controller 14 determines that the height of the target P satisfies the preset appearance condition, the controller 14 sends a startup signal to the depth camera 13. The depth camera 13 performs the facial recognition on the target P within the third preset range C3.

It may be noted that in the embodiments of the present disclosure, only the preset appearance condition being height is taken as an example for exemplary introduction, but it is not limited that only the height of the target P can be used as the basis for determining whether the target P satisfies the preset appearance condition. In other embodiments of the present disclosure, the appearance contour information such as the body shape of the target P can also be used as the basis for determining whether the target P satisfies the preset appearance condition.

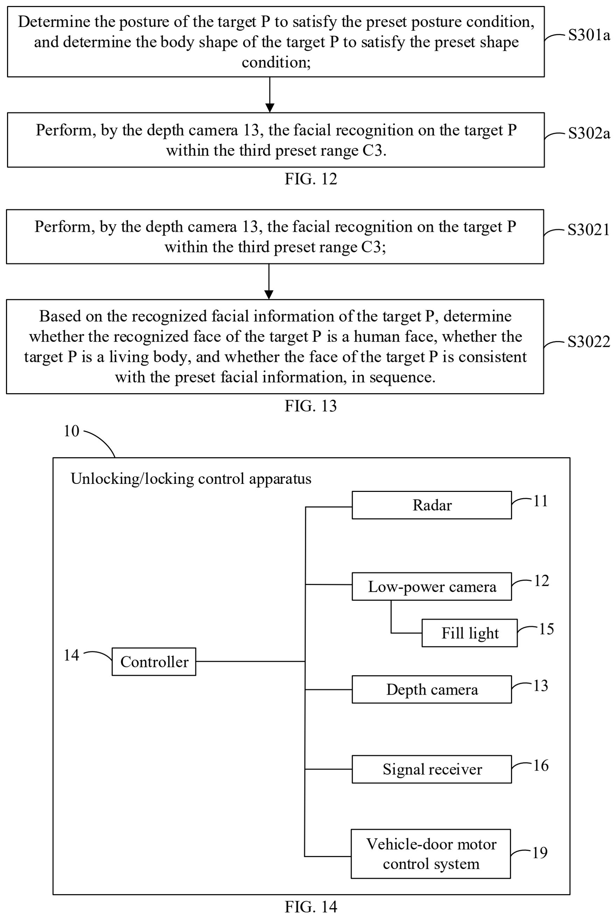

For example, in an embodiment, reference can be made to FIG. 12, which is a schematic view of a workflow of performing facial recognition on a target P within a third preset range C3 by a depth camera 13 according to an unlocking/locking control method provided in embodiments of the present disclosure. As illustrated in FIG. 12, "in response to determining that the posture of the target P satisfies the preset posture condition, the facial recognition is performed on the target P within the third preset range C3 by the depth camera 13" at S300 includes as follows.

At S301a, the posture of the target P is determined to satisfy the preset posture condition, and the body shape of the target P is determined to satisfy the preset shape condition.

Specifically, the low-power camera 12 recognizes and obtains the posture information and body shape information of the target P, and can transmit the obtained posture information and body shape information of the target P to the controller 14. The controller 14 first determines whether the posture of the target P satisfies the preset posture condition based on the received posture information of the target P, for example, whether an angle between a face orientation of the target P and the low-power camera 12 is less than or equal to 45°.

If the controller 14 determines that the posture of the target P satisfies the preset posture condition, the controller 14 continues to determine the body shape information of the target P obtained by the low-power camera 12.

The body shape of the target P can be understood as the width of the body of the target P. Meanwhile, the unlocking/locking control method of the present disclosure can input in advance, the body shape information of the owner of the vehicle 100 or the user authorized to open the vehicle 100, to serve as the basis for the controller 14 to determine whether the body shape of the target P satisfies the preset shape condition.

If the body shape of the target P matches the body shape information of the owner of the vehicle 100 or the user authorized to open the vehicle 100 input in advance, the body shape of the target P is determined to satisfy the preset shape condition. The subsequent operations of the unlocking/locking control method of the present disclosure will then be performed.

At S302a, the facial recognition is performed on the target P within the third preset range C3 by the depth camera 13.

In an embodiment, the height and body shape of the target P can also be combined as the basis for determining whether the target P satisfies the preset shape condition.

It can be understood that by recognizing the height or the appearance contour features of the body shape of the target P, and in combination the posture of the target P, whether the target P is the owner or the user authorized to open the vehicle door 102 of the vehicle 100 can be determined.

That is, by adding the operation of determining whether the height or body shape of the target P satisfies the preset shape condition, the target P whose posture satisfies the preset posture condition recognized by the low-power camera 12 but whose height or body shape is significantly different from or does not match that of the owner of the vehicle 100, can be excluded, thereby avoiding the false triggering of the depth camera 13, improving the recognition accuracy of the unlocking/locking control method of the present disclosure, and further avoiding the frequent startup of the depth camera 13 to reduce power consumption.

In an embodiment, the time required for the depth camera 13 to perform facial recognition on the target P may be, but is not limited to, 365 ms.

In an embodiment, reference can be made to FIG. 13, which is a schematic view of a workflow of performing facial recognition on a target P within a third preset range C3 by a depth camera 13 according to an unlocking/locking control method provided in embodiments of the present disclosure. As illustrated in FIG. 13, "the facial recognition is performed on the target P within the third preset range C3 by the depth camera 13" at S302 includes as follows.

At S3021, the facial recognition is performed on the target P within the third preset range C3 by the depth camera 13.

Specifically, the radar 11 detects the target P within the third preset range C3 and triggers the controller 14 to control the depth camera 13 to perform the facial detection on the target P detected by the radar 11, that is, to control the depth camera 13 to extract the facial feature information of the target P, such as but not limited to extracting information including the pupils, nose, mouth, or other facial features, as well as the facial contour features of the target P.

In an embodiment, if the face of the target P is partially blocked, the depth camera 13 can also extract information such as the exposed partial facial features or contours of the target P. For example, if the target P may wear items such as a mask, the depth camera 13 can extract facial features of the target P that are exposed, such as the pupils and eyebrows, etc.

At S3022, based on the recognized facial information of the target P, whether the recognized face of the target P is a human face, whether the target P is a living body, and whether the face of the target P is consistent with the preset facial information, are determined in sequence.

Specifically, in "based on the recognized facial information of the target P, whether the recognized face of the target P is a human face, whether the target P is a living body, and whether the face of the target P is consistent with the preset facial information, are determined in sequence" at S3022, after the depth camera 13 performs the facial recognition on the target P within the third preset range C3 and obtains the facial feature information of the target P, whether the face of the recognized target P is a human face, whether the recognized target P is a living body, and whether the recognized target P is consistent with the preset facial information, are determined in sequence.

If the face of the recognized target P is determined to be a human face, the depth camera 13 performs living body detection on the target within the third preset range C3.

After the depth camera 13 performs the facial detection on the target P within the third preset range C3, that is, after obtaining the facial features and contour information of the target P, the depth camera 13 can process the obtained facial features and contour information of the target P by itself. In other words, based on the recognized and obtained facial features and contour information of the target P, the depth camera 13 determines whether the face of the target P is a human face, that is, whether the face of the target P conforms to human facial features and contours.

If the detected facial features and contour information of the target P are determined to conform to the human facial features and contours, the living body detection of the target P is begun within the third preset range C3.

The depth camera 13 performing the living body detection on the target P can be understood as determining the real features of the target P by the depth camera 13. That is, whether the target P is a real living body can, but is not limited to, be determined by individual or combined actions such as blinking, opening the mouth, shaking the head, nodding, and so on, together with the facial features and contour information of the target P detected by the depth camera 13.

It can be understood that by performing the living body detection on the target P through the depth camera 13, the target P can be determined to be a real living body, thereby avoiding situations in which interference information such as photos, videos, face-swapping, masks, occlusion, 3D animations, and screen re-recordings triggers the unlocking apparatus to open the vehicle door 102 of the vehicle 100. Thus, the accuracy of the unlocking/locking control method of the present disclosure in identifying the vehicle owner or the user authorized to open the vehicle door 102 of the vehicle 100 can be improved, and the safety of the vehicle 100 can be enhanced.

In an embodiment, in the embodiment illustrated in FIG. 13, only the example where the depth camera 13 can process the obtained information of the target P within the third preset range C3 by itself is used for exemplary introduction. However, it is not limited that the processing method of the information of the target P obtained by the depth camera 13 within the third preset range C3 in the embodiments of the present disclosure is only this. In other embodiments of the present disclosure, the depth camera 13 can also transmit the obtained facial information of the target P to the controller 14, and the controller 14 processes and determines the information obtained by the depth camera 13.

If the recognized target P is determined to be a living body, the depth camera 13 compares and recognizes the face of the target P with the preset facial information within the third preset range C3.

Specifically, after the depth camera 13 performs the living body detection on the target P, the depth camera 13 determines whether the target P is a real living body.

If the target P is determined to be a real living body, the comparison and recognition of the face of the target P with the preset facial information are begun within the third preset range C3.

The preset facial information may be the facial features and contour information of the owner of the vehicle 100 or the user authorized to open the vehicle door 102 of the vehicle 100 input in advance. The depth camera 13 compares the facial features and contour information of the target P recognized within the third preset range C3 with the preset facial information, so that the depth camera 13 can determine whether the target P recognized within the third preset range C3 is the owner of the vehicle 100 or the user authorized to open the vehicle door 102 of the vehicle 100.

It can be understood that when the target P moves into the third preset range C3, the depth camera 13 performs human face judgement, living body recognition, and facial recognition on the target P successively, thereby avoiding interference information such as animals, photos, videos, face-swapping, masks, occlusion, 3D animations, and screen re-recordings successively. Thus, using the unlocking/locking control method of the present disclosure, the owner of the vehicle 100 and the user authorized to open the vehicle door 102 of the vehicle 100 can be accurately recognized, and other people, organisms, or objects that are not authorized or may trigger the unlocking by mistake can be excluded. Thus, the accuracy and reliability of the recognition of the unlocking/locking control apparatus 10 and the unlocking/locking control method of the present disclosure are gradually improved, so as to further improve the safety of the vehicle 100.

At S400, in response to the facial recognition being successful, an unlocking instruction is issued to unlock.

Specifically, reference can be made to FIG. 14, which is a schematic view of a topology of one architecture of an unlocking/locking control apparatus 10 provided in embodiments of the present disclosure. As illustrated in FIG. 14, the unlocking/locking control apparatus 10 according to the embodiments of the present disclosure may be equipped with a vehicle-door motor control system 19. The vehicle-door motor control system 19 is electrically connected to the controller 14 so as to receive the unlocking instruction sent by the controller 14, and is configured to open the vehicle door 102, thereby realizing the unlocking function of the unlocking/locking control apparatus of the present disclosure.

Further, in operation that "in response to the facial recognition being successful, an unlocking instruction is issued to unlock" at S400, after the depth camera 13 performs the facial recognition on the target P within the third preset range C3 and the facial recognition is successful, the depth camera 13 sends a signal indicating successful recognition to the controller 14. When the controller 14 receives the signal indicating successful recognition sent by the depth camera 13, the controller 14 issues an unlocking instruction to the vehicle-door motor control system 19, so as to control the vehicle-door motor control system 19 to achieve the unlocking effect.

The unlocking/locking control method usually requires relevant devices to remain on standby for a long time, and the devices with relatively high power consumption are adopted in consideration of safety, thereby resulting in increased energy consumption of the passive unlocking/locking function.

According to the unlocking/locking control method of the present disclosure, the radar 11 first detects the target P within the first preset range C1 and obtains the moving speed V of the target P. In this way, objects moving excessively fast or people using transportation means can be filtered out, thereby avoiding frequent startup of the low-power camera 12. Then, the low-power camera 12 performs the posture recognition on the target P to determine whether the target P intends to approach the vehicle 100, thereby avoiding frequent startup of the depth camera 13 due to detection of pedestrians. Finally, the depth camera 13 performs the facial recognition on the target P to unlock.

Since the power consumption of the radar 11, the low-power camera 12, and the depth camera 13 increases step by step, while the respective recognition range decreases step by step, the method of the present disclosure, through the cooperation of the radar 11, the low-power camera 12, and the depth camera 13, sets screening conditions in combination with the user usage scenarios, thereby ultimately achieving the lower power consumption and relatively high recognition accuracy.

Further, the unlocking/locking control apparatus 10 provided in the embodiments of the present disclosure, under the control of the controller 14, can be used to implement the unlocking/locking control method in any of the above embodiments. Therefore, the unlocking/locking control apparatus 10 of the present disclosure also improves the recognition accuracy and reduces the power consumption. Meanwhile, since the unlocking/locking control apparatus 10 of the present disclosure is used to implement the unlocking/locking control method in any of the above embodiments, the unlocking/locking control apparatus 10 of the present disclosure possesses all the possible beneficial effects of the unlocking/locking control method in any of the above embodiments.

Further, the vehicle 100 of the present disclosure can be controlled by the unlocking/locking control method provided in any of the above embodiments of the present disclosure, so that the safety of the vehicle 100 can be improved and the power consumption of the vehicle 100 can be reduced. Since the vehicle 100 of the present disclosure is controlled by the unlocking/locking control method provided in any of the above embodiments, the vehicle 100 provided in the embodiments of the present disclosure possesses all the possible beneficial effects of the unlocking/locking control method provided in any of the above embodiments.

Meanwhile, the vehicle 100 of the present disclosure is equipped with the unlocking/locking control apparatus 10 provided in any of the above embodiments, so that the safety of the vehicle 100 can be improved and the power consumption of the vehicle 10 can be reduced. Since the vehicle 100 of the present disclosure includes the unlocking/locking control apparatus 10 provided in any of the above embodiments, the vehicle 100 of the present disclosure possesses all the possible beneficial effects of the unlocking/locking control apparatus 10 provided in any of the above embodiments.

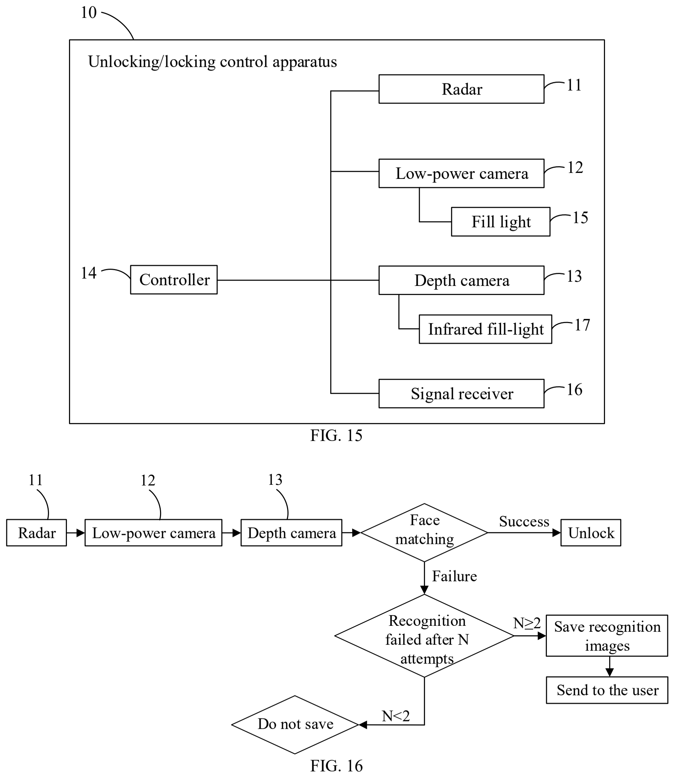

In an embodiment, reference can be made to FIG. 15, which is a schematic view of a topology of another architecture of the unlocking/locking control apparatus 10 provided in the embodiments of the present disclosure. As illustrated in FIG. 15, the unlocking/locking control apparatus 10 provided in embodiments of the present disclosure further includes an infrared fill-light 17. The infrared fill-light 17 is disposed corresponding to the depth camera 13 and cooperates with the depth camera 13 to obtain the palm vein image of the user.

In an embodiment, after issuing the unlocking instruction, the method further includes as follows. In an unlocked state, the palm vein image is obtained within the third preset range by cooperation of the infrared fill-light 17 and the depth camera 13. In response to determining that the palm vein image matches a preset palm vein image, re-locking is performed.

It can be understood that in the unlocked state, by providing the infrared fill-light 17 and the cooperation of the infrared fill-light 17 and the depth camera 13, the palm vein of the user can be recognized, so as to provide the function of quick locking using a specific gesture, thereby enhancing the user experience.

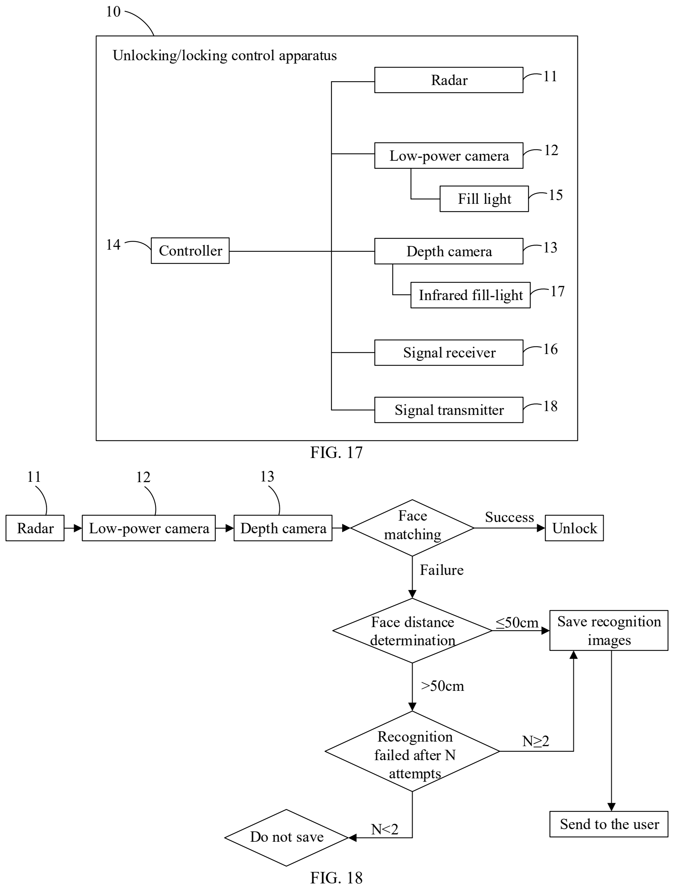

In an embodiment, reference can be made to FIG. 16 and FIG. 17 together, where FIG. 16 is a schematic view of a workflow of performing facial recognition on a target P within a third preset range C3 by a depth camera 13 according to an unlocking/locking control method provided in embodiments of the present disclosure, and FIG. 17 is a schematic structural view of yet another internal framework of the unlocking/locking control apparatus 10 provided in the embodiments of the present disclosure. As illustrated in FIG. 16, "in response to determining that the posture of the target P satisfies the preset posture condition, the facial recognition is performed on the target P within the third preset range C3 by the depth camera 13" at S300 further includes as follows. In response to performing, by the depth camera 13, the facial recognition on the target P within the third preset range C3 for more than a predetermined number of times without successful unlocking, a warning signal is sent to the user and the image data collected by the depth camera 13 is sent synchronously to the user.

As illustrated in FIG. 17, the unlocking/locking control apparatus 10 includes a signal transmitter 18. The signal transmitter 18 is configured to send a warning signal to the user and synchronously send the image data collected by the depth camera 13 when unlocking fails.

Specifically, the signal transmitter 18 can be electrically connected to the controller 14, so that when the unlocking fails, the signal transmitter 18 can receive the signal sending instruction transmitted by the controller 14 and send a warning signal and the facial image data of the target P obtained by the depth camera 13 to the user based on the instruction transmitted by the controller 14.

The signal transmitter 18 may be, but is not limited to, a Bluetooth device, a wireless electronic device, or other information transmission devices capable of transmitting warning signals and image data. The user may receive the warning signal sent by the signal transmitter 18 of the unlocking/locking control apparatus 10 and the facial feature image information of the target P obtained by the depth camera 13 through an electronic device such as a smartphone, a smart band, a tablet, a computer, etc., but is not limited to this.

It can be understood that by providing the signal transmitter 18, the warning signal can be sent to the user in time, so that the user can grasp the status of the vehicle 100 in real time, thereby improving the usage effect of the unlocking/locking control apparatus 10 of the present disclosure and enhancing the safety of the vehicle 100.

Further, as illustrated in FIG. 16, when the radar 11 detects the target P within the first preset range C1, the low-power camera 12 is first started by the controller 14 to perform the posture recognition on the target P within the second preset range C2, and then the depth camera 13 is started to perform the facial recognition on the target P within the third preset range C3.

When the radar 11 detects the target P within the third preset range C3, and the depth camera 13 performs the facial recognition for more than the predetermined number of times N, that is, when the unlocking fails after performing the facial recognition on the target P for N times or more, the depth camera 13 sends a signal indicating facial recognition failure to the controller 14, and the depth camera 13 synchronously obtains the facial image data of the target P whose the number of times of the facial recognition exceeds the predetermined number of times N and transmits the obtained facial image data to the controller 14.

After receiving the signal indicating facial recognition failure sent by the depth camera 13 and the facial image data of the target P whose the number of times of the facial recognition exceeds the predetermined number of times N, the obtained information can be transmitted to the user by the signal transmitter 18. Therefore, the user can grasp the status of the vehicle 100 in real time and promptly check the unlocking status and safety of the vehicle 100.

It can be understood that when the depth camera 13 fails to unlock the vehicle after performing multiple facial recognition attempts on the target P within the third preset range C3, the target P detected within the third preset range C3 may pose a threat to the safety of the vehicle 100. Therefore, a warning signal is sent to alert the vehicle owner, and the image data is synchronously sent to the owner, thereby enhancing the safety of the unlocking/locking control method of the present disclosure and the unlocking/locking control apparatus 10 for implementing the present disclosure.

In an embodiment, the predetermined number of times N may be, but is not limited to, two.

In an embodiment, reference can be made to FIG. 18, which is a schematic view of a workflow of performing facial recognition on a target P within a third preset range C3 by a depth camera 13 according to an unlocking/locking control method provided in embodiments of the present disclosure. As illustrated in FIG. 18, "the facial recognition is performed on the target P within the third preset range C3 by the depth camera 13" at S300 further includes as follows. In response to performing, by the depth camera 13, the facial recognition on the target P within a fourth preset range, a warning signal is sent to the user and the image data collected by the depth camera 13 is synchronously sent to the user. The fourth preset range is less than or equal to 0.5 m.

Specifically, when the radar 11 detects the target P within the first preset range C1, the low-power camera 12 is first started by the controller 14 to perform the posture recognition on the target P within the second preset range C2, and then the depth camera 13 is started to perform the facial recognition on the target P within the third preset range C3.

After the depth camera 13 fails to successfully recognize the face of the target P within the third preset range C3, the depth camera 13 detects the distance between the face of the target P and the depth camera 13 at this time, and sends the obtained distance information to the controller 14.

After receiving the distance information between the face of the target P and the depth camera 13, the controller 14 determines whether the distance between the face of the target P and the depth camera 13 is within the fourth preset range.

If the distance between the face of the target P and the depth camera 13 is determined to be within the fourth preset range, the facial feature image data of the present target P is obtained, and the obtained facial feature image data of the present target P is transmitted to the controller 14.

After receiving the facial image data of the target P sent by the depth camera 13, the controller 14 can transmit this information to the user via the signal transmitter 18. Therefore, the user can grasp the status of the vehicle 100 in real time and promptly check the unlocking status and safety of the vehicle 100.

If the distance between the face of the target P and the depth camera 13 is determined to exceed the fourth preset range, the depth camera 13 performs facial recognition on the target P again.

In this embodiment, when the depth camera 13 recognizes the target P within a range that is overly close to the vehicle 100 and fails to successfully recognize the face of the target P, it is determined that the target P may pose a threat to the safety of the vehicle 100. Therefore, a warning signal is sent to alert the vehicle owner, and the image data is synchronously sent, thereby enhancing the safety of the unlocking/locking control method of the present disclosure and the unlocking/locking control apparatus 10 for implementing the present disclosure.

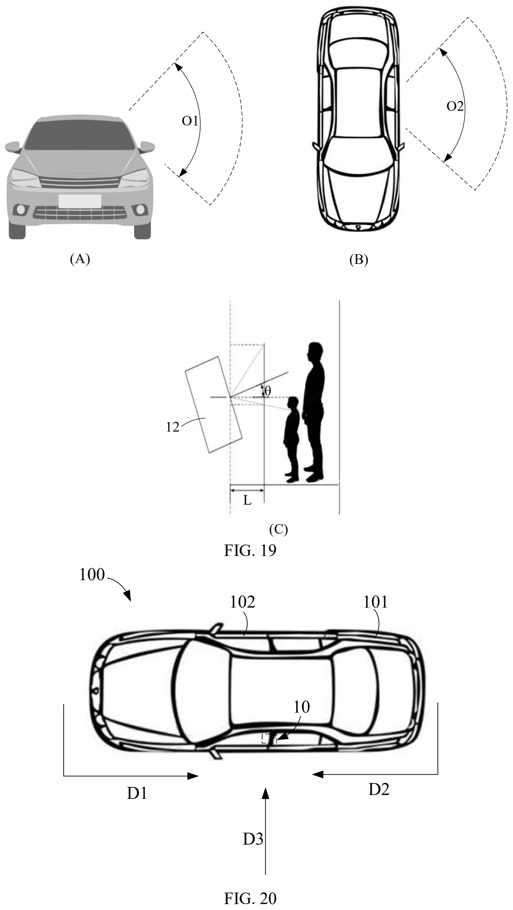

In an embodiment, reference can be made to FIG. 19 and FIG. 20, where FIG. 19 is a schematic view of mounting of various functional structural components of an unlocking/locking control apparatus 10 provided in embodiments of the present disclosure, and FIG. 20 is a schematic view of a travel route of a target P recognized by an unlocking/locking control method provided in embodiments of the present disclosure. As illustrated in FIG. 19 and FIG. 20, in the embodiments of the present disclosure, the mounting parameters and setting parameters of the unlocking/locking control apparatus 10 of the present disclosure can be adjusted with reference to users of different heights or with different body shape characteristics.

Exemplarily, as illustrated in FIG. 19(A), a vertical viewing angle range O1 of the low-power camera 12 or the depth camera 13 may be, but is not limited to, set to ±70°.

Exemplarily, as illustrated in FIG. 19(B), a horizontal viewing angle range O2 of the low-power camera 12 or the depth camera 13 may be, but is not limited to, set to ±55°.

Exemplarily, as illustrated in FIG. 19(C), a mounting height L of the low-power camera 12 or the depth camera 13 may be, but is not limited to, 1.4 m.

Exemplarily, as illustrated in FIG. 19(C), an elevation angle θ of the low-power camera 12 or the depth camera 13 may be, but is not limited to, 15°. The elevation angle of the low-power camera 12 may be understood as an angle between an optical axis of the low-power camera 12 and the horizontal direction. The elevation angle of the depth camera 13 may be understood as an angle between an optical axis of the depth camera 13 and the horizontal direction. In FIG. 19(C), a mounting schematic of the low-power camera 12 is taken as an example, which may synchronously be regarded as that of the depth camera 13.

Exemplarily, as illustrated in FIG. 19(C), a horizontal distance L between the low-power camera 12 or the depth camera 13 and the user may be, but is not limited to, 0.3 m - 0.9 m.

Exemplarily, as illustrated in FIG. 19(C), the low-power camera 12 or the depth camera 13 can be adapted to a user with a height of, but not limited to, 1.32 m - 2.47 m.

Exemplarily, the low-power camera 12 or the depth camera 13 may be adapted to a user with a head length of, but not limited to, 0.25 m.

Further, as illustrated in FIG. 20, when the target P enters the recognizable region of the unlocking/locking control method of the present disclosure along different travel routes, the time required for unlocking using the unlocking/locking control method or the unlocking/locking control apparatus of the present disclosure varies, and the recognizable distances also vary. Exemplarily, when the target P enters the recognizable region along a first travel route D1 or a second travel route D2 at a moving speed V of 1.3 m/s, the time required for the unlocking/locking control method of the present disclosure to successfully recognize the target P is only 0.5 s - 1 s, and the recognition distance for the target P may be, but is not limited to, 0.6 m.

Exemplarily, when the target P enters the recognizable region along the third travel route D3 at a moving speed V of 1.3 m/s, the time required for the unlocking/locking control method of the present disclosure to successfully recognize the target P may be less than 0.5 s, and the recognition distance for the target P may be, but is not limited to, 0.6 m.

The above-mentioned implementations do not constitute any limitation on the protection scope of the technical solution. Any modifications, equivalent substitutions, and improvements made within the spirit and principle of the above implementations shall fall within the protection scope of the technical solution.

## Claims

1. An unlocking/locking control method, comprising:
detecting, by a radar, a target within a first preset range and obtaining, by the radar, a moving speed of the target, in a locked state;
starting a low-power camera, and performing, by the low-power camera, posture recognition on the target within a second preset range, in response to the target being detected and the moving speed of the target being less than a preset speed threshold V0, wherein the second preset range is smaller than the first preset range;
starting a depth camera, and performing, by the depth camera, facial recognition on the target within a third preset range, in response to determining that a posture of the target satisfies a preset posture condition, wherein the third preset range is smaller than the second preset range; and
issuing an unlocking instruction to unlock, in response to the facial recognition being successful.

2. The method of claim 1, wherein a duration from a moment at which the radar detects the target to a moment at which the low-power camera is started is T1, the first preset range is less than or equal to W1, the second preset range is less than or equal to W2, and W2 satisfies: W2 ≥ W1 - V0 × T1; and/or
a duration from the moment at which the low-power camera is started to a moment at which the depth camera is started is T2, the third preset range is less than or equal to W3, and W3 satisfies: W3 ≥ W2 - V0 × T2.

3. The method of claim 1, wherein the first preset range is less than or equal to 5 m; and/or
the second preset range is less than or equal to 3 m; and/or
the third preset range is less than or equal to 1 m.

4. The method of claim 1, wherein before detecting, by the radar, the target within the first preset range and obtaining, by the radar, the moving speed of the target, in the locked state, the method further comprises:
collecting a plurality of sets of recognition data, and screening recognition data that satisfies user requirements based on a predetermined algorithm; and processing the screened recognition data that satisfies the user requirements to determine the second preset range and/or the third preset range; and/or
collecting a plurality of sets of recognition data, and screening recognition data that satisfies user requirements based on a predetermined algorithm; and processing the screened recognition data that satisfies the user requirements to determine the preset speed threshold V0.

5. The method of any one of claims 1 to 4, wherein the preset speed threshold V0 is less than or equal to 1.5 m/s; and/or
the preset posture condition is that an angle at which a face of the target faces towards the low-power camera is less than or equal to 45°.

6. The method of any one of claims 1 to 4, wherein performing, by the depth camera, the facial recognition on the target within the third preset range, in response to determining that the posture of the target satisfies the preset posture condition, comprises:
determining that the posture of the target satisfies the preset posture condition, and a height and/or a body shape of the target satisfies a preset appearance condition; and
performing, by the depth camera, the facial recognition on the target within the third preset range.

7. The method of any one of claims 1 to 4, wherein performing, by the depth camera, the facial recognition on the target within the third preset range, comprises:
performing, by the depth camera, the facial recognition on the target within the third preset range; and
determining, in sequence, whether a recognized face of the target is a human face, whether the target is a living body, and whether the face of the target is consistent with preset facial information, based on recognized facial information of the target.

8. The method of any one of claims 1 to 4, wherein performing, by the depth camera, the facial recognition on the target within the third preset range, further comprises:
sending a warning signal to a user and synchronously sending image data collected by the depth camera to the user, in response to performing, by the depth camera, the facial recognition on the target within the third preset range for more than a predetermined number of times without successful unlocking, and/or in response to performing, by the depth camera, the facial recognition on the target within a fourth preset range without successful unlocking; wherein the fourth preset range is smaller than or equal to the third preset range.

9. The method of any one of claims 1 to 4, wherein after issuing the unlocking instruction, the method further comprises:
obtaining a palm vein image within the third preset range by cooperation of an infrared fill-light and the depth camera, in an unlocked state; and
re-locking, in response to determining that the palm vein image matches a preset palm vein image.

10. An unlocking/locking control apparatus, comprising:
a radar, configured to detect a target within a first preset range and obtain a moving speed of the target;
a low-power camera, configured to perform posture recognition on the target within a second preset range;
a depth camera, configured to perform facial recognition on the target within a third preset range; and
a controller, configured to control sequential startup of the radar, the low-power camera, and the depth camera, and configured to issue an unlocking instruction to unlock.

11. A vehicle, wherein the vehicle is controlled by the unlocking/locking control method of any one of claims 1 to 9; and/or the vehicle comprises the unlocking/locking control apparatus of claim 10.
